Europäisches Patentamt

European Patent Office

Office européen des brevets

(11) Veröffentlichungsnummer: **0 233 146 B1**

## EUROPÄISCHE PATENTSCHRIFT

(45) Veröffentlichungstag der Patentschrift: 06.03.91

(21) Anmeldenummer: 87810049.4

(22) Anmeldetag: 26.01.87

(51) Int. Cl.⁵: **C04B 41/00, C03C 23/00, C23D 5/06, C23D 13/00, B44C 1/00**

(54) **Laserbeschriftung von keramischen Materialien, Glasuren, keramischen Gläsern und Gläsern.**

(30) Priorität: 31.01.86 CH 363/86

(43) Veröffentlichungstag der Anmeldung:
19.08.87 Patentblatt 87/34

(45) Bekanntmachung des Hinweises auf die
Patenterteilung:
06.03.91 Patentblatt 91/10

(84) Benannte Vertragsstaaten:
BE CH DE ES FR GB IT LI NL SE

(56) Entgegenhaltungen:
DE-A- 3 108 404      DE-A- 3 130 214
FR-A- 2 370 004      GB-A- 2 169 282
US-A- 3 359 125      US-A- 3 596 045

(73) Patentinhaber: CIBA-GEIGY AG
Klybeckstrasse 141
CH-4002 Basel(CH)

(72) Erfinder: Gugger, Heinrich, Dr.
Im Marcoup 8
CH-3286 Muntelier(CH)
Erfinder: Herren, Fritz, Dr.
Birkenweg 8
CH-3186 Düdingen(CH)
Erfinder: Hofmann, Manfred, Dr.
Route Bel-Air 38
CH-1723 Marly(CH)
Erfinder: Pugin, André, Dr.
La Dollaz
CH-1634 Pont-la-Ville(CH)

## Beschreibung

Die vorliegende Erfindung betrifft ein Verfahren zur Laserbeschriftung von keramischen Materialien, Glasuren, keramischen Gläsern und Gläsern, sowie das beschriftete Material.

Keramische Materialien, Glasuren und Gläser werden nach konventionellen Markierverfahren, wie Aetzen, Ritzen, Gravieren, Schleifen oder Aufbringen einer Glas- bzw. Glasurfarbe, beschriftet. Dabei wird die Oberfläche des beschrifteten Materials verändert, was insbesonders beim Aetzen, Gravieren und Ritzen zur Beschädigung des Materials führen kann. Beim Aufbringen einer Glas- bzw. einer Glasurfarbe ist zudem ein zweiter Einbrennvorgang erforderlich. Die so erhaltenen Markierungen sind in Bezug auf Abriebbeständigkeit nicht immer optimal.

Es ist ferner bekannt, die Beschriftung von Gläsern mit einem Laser durchzuführen, wobei die bekannten Verfahren auf dem Aufschmelzen oder Entfernen von Matrixmaterial beruhen, so dass dabei die Struktur des beschrifteten Materials an der Oberfläche auch verändert wird. So wird beispielsweise in der DDR-Patentschrift Nr. 215776 vorgeschlagen, farbige Bilder auf Glas durch Laserbestrahlung zu erzeugen. Dabei wird das Glas, das mit einer einen Farbstoff enthaltenden Deckschicht versehen ist, so bestrahlt, dass der Farbstoff in das durch das Laserlicht aufgeweichte Glas diffundiert.

Ausserdem wird in FR-A-2 370 007 ein Verfahren zur optischen Behandlung farbiges, metallisches Silber und eine Silberhalidphase enthaltender Gläser zwecks Erzeugung farbiger und anisotroper Gläser beschrieben. Dabei können mit polarisiertem Licht, z.B. mit polarisiertem Laserlicht, dichroitische und doppelbrechende Gläser hergestellt werden. Schliesslich wird in DE-A- 3 108 404 eine Maschine zum Dekorieren und Markieren von Glasartikeln mittels fokussierten Laserstrahlen beschrieben.

Es wurde nun ein direktes und einfaches Verfahren gefunden, welches die Beschriftung von keramischen Materialien, insbesondere von bereits gebrannten keramischen Materialien, Glasuren, keramischen Gläsern und Gläsern ohne Beschädigung der Oberfläche ermöglicht.

Gegenstand der vorliegenden Erfindung ist ein Verfahren zur Laserbeschriftung von keramischen Materialien, Glasuren, keramischen Gläsern und Gläsern, die mindestens einen strahlungsempfindlichen Zusatzstoff enthalten, wobei als Energiestrahler ein Laser verwendet wird, und die Energiestrahlung entsprechend der Form des aufzubringenden Schriftzeichens auf die Oberfläche des zu markierenden Materials gerichtet, gegebenenfalls fokussiert wird, wodurch an den bestrahlten Stellen eine Verfärbung entsteht, dadurch gekennzeichnet, dass man als Energiestrahlung Laserlicht, dessen Wellenlänge im nahen UV- und/oder sichtbaren und/oder IR-Bereich liegt, und als strahlungsempfindlichen Zusatzstoff ein anorganisches Pigment verwende, ohne dass die Oberfläche des beschrifteten Materials von Aufe erkenntar beschädigt wird.

Besonders geeignet ist das erfindungsgemässe Verfahren zur Beschriftung von keramischen Materialien und Glasuren.

Unter keramischen Materialien versteht man anorganische, nichtmetallische hochschmelzende Materialien, die in der Literatur meistens als Tonkeramik und Sonderkeramik bezeichnet sind. Beispiele hierfür sind oxidische Verbindungen in kristalliner oder glasiger Form, z.B. Alkalimetall-Erdalkalimetall-Alumino-Silikate oder -Borate, ferner nicht oxidische Verbindungen, wie Carbide, Nitride und Silicide. Fur weitere Beispiele wird auf die Ullmanns Enzyklopädie der techn. Chemie, 4. Auflage, Bd. 13, S. 712-716 hingewiesen.

Glasuren sind auf einem keramischen Material aufgetragene glasartige Ueberzüge, deren Zusamensetzung derjenigen von Glas sehr ähnlich ist, und beispielsweise in obiger Ullmans Enzyklopädie, 4. Auflage, Bd. 13, S. 722-724, beschrieben ist. Typische Beispiele hierfür sind Glasuren, die aus Quarz, Tonerde, Alkalimetalloxiden, Erdalkalimetalloxiden, und niedrig schmelzenden Oxiden (wie $Na_2O$, $K_2O$, $CaO$ und $BaO$) als Flussmittel bestehen.

Gläser und keramische Gläser sind dem Fachmann auch wohlbekannt und beispielsweise in der oben aufgeführten Ullmanns Enzyklopädie, 4. Auflage, Bd. 12, S. 317-366, beschrieben.

Als strahlungsempfindliche Zusatzstoffe kommen anorganische Pigmente in Frage, welche vorzugsweise im nahen UV- und/oder sichtbaren oder nahen IR-Bereich absorbieren.

Unter nahem UV-Bereich versteht man den Bereich zwischen 0,25 $\mu$m und 0,38 $\mu$m. Besonders geeignet sind Zusatzstoffe, die im sichtbaren Bereich absorbieren.

Beispiele von geeigneten anorganischen Pigmenten sind z.B. in Ullmans Enzyklopädie der techn. Chemie, 4. Auflage, Bd. 14, S. 1-12, und in der Publikation der Dry Color Manufacturers' Association (DCMA) "Classification and Description of the Mixed Metal Oxide Inorganic Colored Pigments", Second Edition, January 1982, beschrieben. Dabei handelt es sich um "keramische Farbkörper", wie beispielsweise Verbindungen aus Oxiden verschiedener Uebergangselemente oder Verbindungen aus Oxiden der Uebergangselemente und Metalloxiden von Elementen der Hauptgruppen des Periodensystems, welche beispielsweise nach dem Spinell-Typus aufgebaut sind, ferner Verbindungen, wie Zirkonsilikat, Zirkonoxid oder Zinnoxid, in deren Kristallgitter färbende Ionen von Uebergangsmetallen oder seltenen Erden, eingebaut sind, wie z.B. im Zirkonvanadinblau, im Zirkonpraseodymgelb, im Zinnvanadingelb und im Zirkoneisenrosa, oder die Cadmiumsulfide und -sulfoselenide, sowie um solche Verbindungen enthaltende Einschlusspigmente beispielsweise auf Basis von Zirkonsilikat, Zinnoxid, Zirkonoxid oder Quarz.

Typische keramische Farbkörper sind beispielsweise Kobaltaluminate, Pinkrot, Pinkviolett, Zinnvanadingelb, Zirkonvanadingelb, Zirkonvanadinblau, Zirkonpraseodymgelb, Zirkoneisenrosa, die beispielsweise in Zirkonsilikat, Zinnoxid, Zirkonoxid oder Quarz eingeschlossenen Cadmiumsulfoselenide und Cadmiumsulfide, Kupferrot, Manganrosa, Eisenrot, die Eisenoxid-Braunpigmente, wie Eisenoxide, Eisen-Chrom-Tonerde-Spinelle, Mangan-Tonerde-Spinelle, Zink-Chrom-Spinelle, Eisen-Tonerde-Spinelle, Zink-Eisen-Spinelle, Nickel-Eisen-Spinelle, Mangan-Chrom-Spinelle, Zink-Eisen-Chrom-Spinelle, Zinnoxid, Titandioxid und Titanate, wie beispielsweise Nickel-Antimon-, Chrom-Antimon- oder Mangan-Antimon-Titanat.

Erfindungsgemäss bevorzugt sind Zirkonvanadingelb, Praseodymgelb, die Eisenoxid-Braunpigmente, wie Zink-Eisen-Chrom-Spinelle und Zirkoneisenrosa, Titandioxid, Titanate, Cadmiumsulfide und -sulfoselenide sowie solche Verbindungen enthaltende Einschlusspigmente. Besonders bevorzugt ist Zirkoneisenrosa.

Der strahlungsempfindliche Zusatzstoff kann im erfindungsgemäss in Frage kommenden Material beispielsweise in einer Menge von 0,01 bis 30 Gew.-%, vorzugsweise von 0,1 bis 20 Gew.-%, insbesondere aber von 1 bis 10 Gew.-%, vorliegen.

Je nach Verwendungszweck können den erfindungsgemäss zu beschriftenden Materialien noch weitere Zusätze, die dem Fachmann bekannt sind, zugefügt werden, wie beispielsweise Glasflüsse, farbige oder farblose Lüster und Verflüssigungsmittel.

Zur Beschriftung der erfindungsgemäss in Frage kommenden anorganischen Materialien werden zweckmässig energiereiche Laser-Quellen verwendet. Dabei wird die Energiestrahlung entsprechend der Form des aufzubringenden Schriftzeichens auf die Oberfläche des zu markierenden Materials gerichtet, gegebenenfalls fokussiert, wobei an den bestrahlten Stellen eine Verfärbung entsteht, ohne dass die Oberfläche des beschrifteten Materials von Auge erkennbar beschädigt wird. Geeignet sind beispielsweise Laser, die Energie bei einer Wellenlänge in nahem UV-Bereich, im sichtbaren und/oder IR-Bereich strahlen.

Beispiele für solche Laser-Quellen sind Festkörper-Pulslaser, wie Rubinlaser oder frequenzvervielfachter Nd:YAG-Laser, gepulste Laser mit Zusatzeinrichtung, wie gepulste Farbstofflaser oder Ramanshifter, weiter Dauerstrichlaser mit Pulsmodifikationen (Q-Switch, Mode-Locker), beispielsweise auf Basis von CW Nd:YAG-Lasern mit Frequenzvervielfacher, oder CW Ionen-Laser (Ar, Kr), ferner gepulste Metalldampflaser, wie beispielsweise Cu-Dampflaser oder Au-Dampflaser, oder allenfalls leistungsstarke gepulste Halbleiter-Laser, ferner gepulste Gaslaser, wie Excimer.

Je nach eingesetztem Laser-System sind Pulsenergien bis einige Joule, Leistungsdichten bis Terawatt pro $cm^2$, Pulsbreiten bis Femto-Sekunden und Repetitionsraten bis Gigahertz möglich. Vorteilhafterweise werden Pulsenergien von Microjoule bis Joule, Leistungsdichten von Kilowatt pro $cm^2$ bis 100 Megawatt pro $cm^2$, Pulsbreiten von Micro-Sekunden bis Pico-Sekunden und Repetitionsraten von Hertz bis 250 Megahertz eingesetzt.

Bevorzugt werden Laser mit gepulstem Licht verwendet, wie beispielsweise in der nachstehenden Tabelle aufgeführt. Besonders bevorzugt sind gepulste oder pulsmodifizierte frequenzverdoppelte Nd:YAG-Laser oder Metall-Dampflaser, wie Au- oder insbesondere Cu-Dampflaser. Ebenfalls besonders bevorzugt ist ein Laserstrahl mit einer Wellenlänge im sichtbaren und/oder nahen IR-Bereich. Unter nahem IR-Bereich versteht man den Bereich zwischen 0,78 $\mu$m und 2 $\mu$m.

In der folgenden Tabelle sind einige handelsübliche Laser aufgeführt, die erfindungsgemäss in Frage kommen können.

## Tabelle

| Art/Vertreter | Kommerzielles Beispiel | Hauptwellen-länge (Neben-wellenlängen) [nm] |
|---|---|---|
| Festkörper-Pulslaser<br>•Rubinlaser<br><br>•Nd:YAG-Laser<br><br>•Alexandrit-Laser | Lasermetrics (938R6R4L-4)<br>Quanta Ray (DCR 2A)<br>Apollo (7562) | 694 (347)<br><br>1064, (532, 355,266)<br>730-780 |
| Gepulste Laser mit Zusatzeinrichtung, wie<br>•Raman-Shifter<br><br>•Farbstofflaser | Quanta Ray (RS-1)<br>Lambda Physik FL 2002 | UV-IR<br><br>ca.300-1000 |
| CW-Laser mit Puls-modifikation<br>•Nd:YAG (Q-Switch,$2\omega$)<br><br>•Argon (mode-locked) | Lasermetrics (9560QTG)<br>Spectra-Physics | 532<br><br>514,5 |
| Gepulste Metall-dampflaser<br>•Cu-Dampflaser<br><br>•Au-Dampflaser<br><br>•Mn-Dampflaser<br>•Pb-Dampflaser | Plasma-Kinetics 751<br>Plasma-Kinetics<br>⎰ Oxford<br>⎱ Laser CU 25 | 510,578<br><br>628<br><br>534, 1290<br>723 |
| Halbleiter Dioden-laser<br><br>"    Array | M/A COM Typ LD 65<br><br>STANTEL Typ LF 100 | ca. 905<br><br>ca. 905 |
| Gepulste Gaslaser<br>(Excimer)<br>•XeCl ⎞<br>•XeF ⎟<br>•N$_2$ ⎠<br>•CO$_2$ | Lambda Physik EMG-103<br><br>LSI Laser Science inc., PRF 150G | 308<br>351<br>337<br>9000-11000 |

Gemäss dem erfindungsgemässen Verfahren wird beispielsweise mit einem gepulsten frequenzverdoppelten Nd:YAG-Laser zwischen 0,01 und 1 Joule pro $cm^2$ Pulsenergie, etwa 40 Megawatt Spitzenleistung, 6-8 Nano-Sekunden Pulsbreite und 20 Hertz Repetitionsrate (Modell Quanta Ray DCR-2 A der Firma Spectra Physics, Mountain View, California) gearbeitet.

Verwendet man einen Cu-Dampflaser (Plasma Kinetics Modell 151), so wird beispielsweise mit 250 Millijoule pro cm$^2$ Pulsenergie, etwa 10 Kilowatt Spitzenleistung, 30 Nano-Sekunden Pulsbreite und 6 Kilohertz Repetitionsrate belichtet.

Laser mit guter Einstellbarkeit ihrer Laserparameter, wie beispielsweise Pulsenergie und Einwirkzeit, erlauben eine optimale Anpassung an die Bedürfnisse der zu beschriftenden Materialien.

Die optimale, zur Bestrahlung auszuwählende Wellenlänge ist diejenige, bei welcher der strahlungsempfindliche Zusatzstoff am meisten, das zu beschriftende anorganische Material dagegen am wenigsten absorbieren.

Zur Beschriftung mit Lasern kommen im allgemeinen drei verschiedene Verfahren in Frage: das Maskenverfahren, die linienförmige Beschriftung und das Punkt-Matrix-Verfahren. Bei den zwei letztgenannten Beschriftungsarten (dynamische Strahlführung) wird der Laser bevorzugt mit einem Laserbeschriftungssystem gekoppelt, so dass das anorganische Material mit beliebigen, beispielsweise in einem Computer programmierten Ziffern, Buchstaben und Sonderzeichen an der Auftreffstelle des Laserstrahls beschriftet werden kann.

Die Wahl des Lasersystems bezüglich Leistung und Repetitionsrate richtet sich grundsätzlich nach dem zur Anwendung gelangenden Beschriftungsverfahren. Hohe Leistung und niedere Repetitionsrate, wie beim Festkörper-Pulslaser, werden bevorzugt für Maskenbelichtungen angewandt. Mittlere bis kleine Leistungen und schnelle Repetitionsraten beim gepulsten Metalldampflaser oder beim Dauerstrichlaser mit Pulsmodifikationen werden bevorzugt für Beschriftungen angewandt, die eine dynamische Strahlführung erfordern. Die Strahlablenkung kann beispielsweise akustooptisch, holographisch, mit Galvo-Spiegeln oder Polygon-Scannern erfolgen. Die dynamische Strahlführung erlaubt eine äusserst flexible Beschriftung oder Markierung, da die Zeichen elektronisch erzeugt werden können.

Nach dem erfindungsgemässen Verfahren können die verschiedensten Beschriftungsarten erhalten werden. Beispiele hierfür sind: Variable Textprogrammierung von numerischen Zeichen mittels Texteingabe mit einem Bildschirmterminal, Testprogramme von Standardzeichen oder Sonderzeichen, wie Namenszüge, ferner Initialen und Widmungen, Signete oder sich oft wiederholende Daten, fortlaufende Stückzahlnumerierung, Eingabe von Messgrössen, Eingabe eines gespeicherten Programms, Linienbeschriftung oder auch Dekorationen.

Nach dem erfindungsgemässen Verfahren können die verschiedensten technischen Produkte bzw. Objekte, wie keramische Werkstücke und Träger, Gläser, keramische Gläser und Glasuren, beschriftet werden.

Typische Anwendungsbeispiele sind keramische Träger und Gehäuse von Halbleiterschaltungen, keramische Leiterplatten (Dickschicht-, Dünnschicht-, Multilayer-PC-Boards), Bauteile der Elektronik, wie Isolationen, mechanisch beanspruchte Hochtemperatur-Bauteile, wie im Motorenbau verwendete keramische Teile, ferner Werkzeuge für die spanabhebende Bearbeitung von Metallen. Die erfindungsgemässe Verfahren ist besonders vorteilhaft für häufig wechselnde Beschriftungsvorlagen, wie bei der Kennzeichnung von kundenspezifischen elektronischen Bauteilen, bei Kleinserien oder beim Anbringen von fortlaufenden Seriennummern.

Das erfindungsgemässe Verfahren ermöglicht eine direkte und rasche Markierung, welche nicht verwischt werden kann und daher abrieb- und kratzfest ist. Die erfindungsgemäss erhaltenen Markierungen sind ferner korrosions- und lösungsmittelbeständig, dimensionsstabil, deformationsfrei, licht-, hitze- und wetterbeständig, gut lesbar, mit gutem Kontrast und sauberen Randzonen. Ferner werden die mechanischen, physikalischen und chemischen Eigenschaften des so beschrifteten Materials praktisch nicht beeinträchtigt, wie beispielsweise die mechanische Festigkeit und die chemische Resistenz.

Die Eindringtiefe der Markierung hängt vom beschrifteten Material ab. Sie beträgt üblicherweise bis ca. 1 mm. Das erfindungsgemäss in Frage kommende Material wird dabei weitgehendst geschont. Es sind somit Beschriftungen möglich, die keinen von Auge erkennbaren Verlust an Oberflächenglanz bewirken.

Gemäss dem vorliegenden Verfahren tritt unter Laserbestrahlung an der bestrahlten Stelle des Materials ein Farbumschlag mit einem ausgeprägten Kontrast ein. Oft entsteht ein Farbumschlag nach grau oder schwarz. Es ist aber auch möglich, je nach verwendetem strahlungsempfindlichem Zusatzstoff andere Verfärbungen zu erzeugen, so beispielsweise von rot oder gelb zu braun oder grau, von rot oder gelb zu weiss, von schwarz zu weiss oder von braun zu grau oder schwarzbraun.

Ueberraschend beim erfindungsgemässen Verfahren ist, dass anorganische Pigmente, die sehr hohe Brenntemperaturen bis zu 1200°C vertragen und als gut lichtbeständig bekannt sind, bei intensiver Belichtung trotzdem eine Farbänderung oder eine Ausbleichung erfahren.

In den folgenden Beispielen bedeuten Teile, sofern nicht anders angegeben ist, Gewichtsteile.

Beispiele

1a) Herstellung der Glasurproben: 10 g eines in nachstehender Tabelle aufgeführten anorganischen Pigmentes werden mit 90 g einer konventionellen handelsüblichen Glasur der molaren Zusammensetzung K,NaO:0,22/CaO:0,39/ZnO:0,39/$B_2O_3$:0,23/$SiO_2$:2,18, und 55 ml Wasser während 45 Minuten in einer Kugelmühle gemischt. Die erhaltene Glasur wird dann auf eine Keramikscherbe gesprüht (Nassschichtdicke ca. 0,8 mm) und bei ca. 1060° C während 30 Minuten eingebrannt.

Zur Herstellung der Glasur-Weissverschnitte wird gleich wie oben beschrieben verfahren, jedoch werden nur 5 g Pigment und zusätzlich noch 5 g handelsübliches Zirkon (Zirkoniumsilikat) verwendet.

1b) Herstellung der Glasproben 5 g eines in nachstehender Tabelle aufgeführten anorganischen Pigmentes werden zusammen mit einer handelsüblichen konventionellen Glasfritte und einem konventionellen organischen Anmachmittel zu einer Paste verarbeitet, welche dann im Siebdruckverfahren auf eine Glasplatte gebracht und bei ca. 600° C eingebrannt wird.

1c) Herstellung der keramischen Körper (Materialien) 3 g eines in der nachstehenden Tabelle aufgeführten anorganischen Pigments werden mit 97 g eines konventionellen keramischen Pulvers bestehend aus 56 g Feldspat, 8 g $SiO_2$ und 33 g Tonerde trocken vermischt. Dann werden 4 g Wasser zugegeben, die Masse zur Formgebung gepresst und schliesslich bei ca. 1250° C gebrannt.

1d) Beschriftung Die nach den obigen Verfahren 1a), 1b) und 1c) präparierten und gebrannten Proben werden im Strahlengang eines Nd:YAG-Pulslasers (Modell Quanta Ray DCR-2A der Firma Spectra Physics, Mountain View, USA) mit Lichtpulsen von 6-8 ns der Wellenlänge 0,532 µm und 250 mJ Pulsenergie bestrahlt.

Es entstehen Beschriftungen mit gutem Kontrast und dem in nachstehender Tabelle angegebenen Farbumschlag:

## Tabelle

| | | Verwendete Pigmente:* | DCMA-Nummer:** | Farbumschlag | |
|---|---|---|---|---|---|
| | | | | von | nach |

**1a) Glasuren auf Keramikscherben (Grösse der Proben 7,5x7,5 cm)**

| Bsp. Nr. | Verwendete Pigmente:* | DCMA-Nummer:** | von | nach |
|---|---|---|---|---|
| 1 | Zr-Fe-Rosa, C.I. Pigment Rot 232 | 14-44-5 | rosa | beige |
| 2 | Zr-Fe-Rosa, C.I. Pigment Rot 232 (Weissverschnitt mit ZrSiO$_4$) | 14-44-5 | rosa | weiss |
| 3 | Zr-Pr-Gelb, C.I. Pigment Gelb 159 | 14-43-4 | gelb | grau |
| 4 | Zr-V-Gelb, C.I. Pigment Gelb 160 | 1-01-4 | gelb | hellgrau |
| 5 | Cr-Fe-Zn-Braun, C.I. Pigment Braun 33 | 13-37-7 | braun | schwarzbraun |
| 6 | Cr-Fe-Zn-Braun, C.I. Pigment Braun 33 (Weissverschnitt mit ZrSiO$_4$) | 13-37-7 | hellbraun | grau |

**1b) Glasfarben auf Glasplatten (Grösse der Platten 7,5x7,5 cm)**

| Bsp. Nr. | Verwendete Pigmente:* | DCMA-Nummer:** | von | nach |
|---|---|---|---|---|
| 7 | Cd-Gelb, C.I. Pigment Gelb 37 | – | gelb | braun |
| 8 | Cd-Rot, C.I. Pigment Rot 108 | – | rot | grau |
| 9 | TiO$_2$, C.I. Pigment Weiss 6 | – | weiss | grau |
| 10 | Cr-Fe-Zn-Braun, C.I. Pigment Braun 33 | 13-37-7 | braun | schwarz |

EP 0 233 146 B1

1c) | Keramische Körper

| Bsp. Nr. | Verwendete Pigmente:* | DCMA-Nummer:** | Farbumschlag | |
|---|---|---|---|---|
| | | | von | nach |
| 11 | Zr-Fe-Rosa, C.I. Pigment Rot 232 | 14-44-5 | rosa | beige |
| 12 | Ti-Sb-Cr-Gelb, C.I. Pigment Gelb 24 | 11-17-6 | braun | schwarz |
| 13 | Cr-Fe-Zn-Braun, C.I. Pigment Braun 33 | 13-37-7 | braun | schwarz |
| 14 | Cr-Fe-Braun, C.I. Pigment Braun 35 | 13-33-7 | dunkelbraun | beige |
| 15 | Chromoxid, C.I. Pigment Grün 17 | 3-05-3 | grün | braun |

[ (*) Lieferant: Drakenfeld Colors, Firma Ciba-Geigy, Washington, PA]

[ (**) Nummer gemäss DCMA [Classification and Description of the Mixed Metal Oxide Inorganic Colored Pigment, Second Edition, January 1982, Arlington]

**Ansprüche**

1. Verfahren zur Laserbeschriftung von keramischen Materialien, Glasuren, keramischen Gläsern und Gläsern, die mindestens einen strahlungsempfindlichen Zusatzstoff enthalten, wobei als Energiestrahler ein Laser verwendet wird, und die Energiestrahlung entsprechend der Form des aufzubringenden Schriftzeichens auf die Oberfläche des zu markierenden Materials gerichtet, gegebenenfalls fokussiert wird, wodurch an den bestrahlten Stellen eine Verfärbung entsteht, dadurch gekennzeichnet, dass man

8

als Energiestrahlen Laserlicht, dessen Wellenlänge im nahen UV- und/oder sichtbaren und/oder IR-Bereich liegt, und als strahlungsempfindlichen Zusatzstoff ein anorganisches Pigment verwendet, ohne dass die Oberfläche des beschrifteten Materials von Auge erkennbar beschädigt wird.

2. Verfahren gemäss Anspruch 1, dadurch gekennzeichnet, dass keramische Materialien und Glasuren beschriftet werden.

3. Verfahren gemäss Anspruch 1, dadurch gekennzeichnet, dass man einen Laser mit gepulstem Licht verwendet.

4. Verfahren gemäss Anspruch 1, dadurch gekennzeichnet, dass man einen Laserstrahl mit einer Wellenlänge im sichtbaren und/oder nahen IR-Bereich verwendet.

5. Verfahren gemäss Anspruch 1, dadurch gekennzeichnet, dass man einen gepulsten oder pulsmodifizierten frequenzverdoppelten Nd: YAG-Laser oder einen Metall-Dampflaser verwendet.

6. Verfahren gemäss Anspruch 1, dadurch gekennzeichnet, dass man als Zusatzstoff Zirkonvanadingelb, Praseodymgelb, Zink-Eisen-ChromSpinelle, Zirkoneisenrosa, Titandioxid, Titanate, Cadmiumsulfide, Cadmiumsulfoselenide oder solche Verbindungen enthaltende Einschlusspigmente verwendet.

7. Verfahren gemäss Anspruch 6, dadurch gekennzeichnet, dass man Zirkoneisenrosa verwendet.

8. Verfahren gemäss Anspruch 1, dadurch gekennzeichnet, dass der Zusatzstoff in einer Menge von 0,01 bis 30 Gew.-%, bezogen auf das keramische Material, die Glasur, das keramische Glas oder das Glas, vorliegt.

9. Verwendung von anorganischen Pigmenten gemäss Anspruch 6 als strahlungsempfindliche Zusatzstoffe zur Laserbebeschriftung von keramischen Materialien, Glasuren, keramischen Gläsern und Gläsern.

## Claims

1. A method of laser marking ceramic materials, glazes, glass ceramics and glasses that contain at least one radiation-sensitive additive, a laser being used as a high-energy radiation source, and the high-energy radiation being directed onto, or if necessary focused on, the surface of the material to be marked in accordance with the form of the graphic symbol to be applied, such that a change in colour is induced at the irradiated areas, wherein the high-energy radiation used is laser light whose wavelength is in the near UV and/or visible range and/or infra-red range, and the radiation-sensitive additive used is an inorganic pigment, without causing any visually perceptible damage to the surface of the marked material.

2. A method according to claim 1 for marking ceramic materials and glazes.

3. A method according to claim 1, wherein a laser with pulsed light is used.

4. A method according to claim 1, wherein a laser beam having a wavelength in the visible and/or near infra-red range is used.

5. A method according to claim 1, wherein a pulsed or pulse-modified, frequency doubled Nd:YAG laser or a metal vapour laser is used.

6. A method according to claim 1, wherein the additive used is selected from the group consisting of zirconium vanadium yellow, praseodymium yellow, zinc iron chromium spinels, zirconium iron pink, titanium dioxide, titanates, cadmium sulfides, cadmium sulfoselenides or inclusion pigments containing such compounds.

7. A method according to claim 6, wherein zirconium iron pink is used.

8. A method according to claim 1, wherein the additive is present in an amount of 0.01 to 30% by weight, based on the ceramic material, the glaze, the glass ceramic or the glass.

9. Use of an inorganic pigment according to claim 6 as radiation-sensitive additive for the laser marking of ceramic materials, glazes, glass ceramics and glasses.

**Revendications**

1. Procédé pour marquer au laser des matières ceramiques, des glaçures, des verres céramiques et des verres qui contiennent au moins un additif photosensible, selon lequel on utilise un laser comme émetteur de rayonnement énergétique et le rayonnement énergétique est dirigé, éventuellement focalisé, suivant la forme du signe à appliquer sur la surface de la matière à marquer, et provoque ainsi un changement de couleur aux endroits touchés par le rayonnement, procédé caractérisé en ce qu'on utilise, comme rayonnement énergétique, une lumière laser dont la longueur d'onde se trouve dans le proche ultraviolet et/ou le visible et/ou l'infrarouge et, comme additif photosensible, un pigment minéral, sans que la surface de la matière marquée subisse des dommages visibles.

2. Procédé suivant la revendication 1 caractérisé en ce qu' on marque des matières céramiques et des glaçures.

3. Procédé selon la revendication 1 caractérisé en ce qu'on utilise un laser fonctionnant par impulsions.

4. Procédé selon la revendication 1 caractérisé en ce qu'on utilise un faisceau laser qui a une longueur d'onde située dans le visible et/ou dans le proche infrarouge.

5. Procédé selon la revendication 1 caractérisé en ce qu'on utilise un laser Nd:YAG à impulsions ou à impulsions modifiées et à fréquence doublée, ou un laser à vapeur métallique.

6. Procédé selon la revendication 1 caractérisé en ce qu'on utilise, comme additif, du jaune de zirconiumvanadium, du jaune de praséodyme, des spinelles de zincfer-chrome, du rose de zirconium-fer, du dioxyde de titane, des titanates, des sulfures de cadmium, des sulfoséléniures de cadmium ou des pigments d'inclusion contenant de tels composés.

7. Procédé selon la revendication 6 caractérisé en ce qu'on utilise du rose de zirconium-fer.

8. Procédé selon la revendication 1 caractérisé en ce que l'additif est présent en une quantité de 0.01 à 30% en poids par rapport à la matière céramique, à la glaçure, au verre céramique ou au verre.

9. Application de pigments minéraux selon la revendication 6 comme additifs photosensibles pour le marquage au laser de matières céramiques, de glaçures, de verres céramiques ou de verres.